# EUROPEAN PATENT SPECIFICATION

(11) **EP 4 545 810 B1**
(45) Date of publication and mention of the grant of the patent: **21.10.2026**
(21) Application number: 23205961.8
(22) Date of filing: 26.10.2023
(51) Int. Cl.: F16B 2/22, F16B 5/12, F16B 7/04, B64D 11/06, F16B 2/00, F16B 2/14, F16B 7/18

(54) **SYSTEM COMPRISING AN ATTACHMENT CLIP FOR FASTENING AN OBJECT ON A RAIL**
SYSTEM MIT EINER BEFESTIGUNGSKLAMMER ZUR BEFESTIGUNG EINES GEGENSTANDES AN EINER SCHIENE
SYSTÈME COMPRENANT UN CLIP DE FIXATION POUR LA FIXATION D'UN OBJET SUR UN RAIL

(43) Date of publication of application: 30.04.2025
(73) Proprietor: Airbus Operations GmbH, 21129 Hamburg (DE)
(72) Inventor: Voss, Jens, 21129 Hamburg (DE); Roth, Franziska, 21129 Hamburg (DE)
(74) Representative: Airbus Germany

(56) References cited:
- EP-B1- 1 710 111
- EP-B1- 2 757 271
- DE-A1- 19 952 155
- FR-A1- 2 437 521
- US-A1- 2021 347 462
- US-B1- 11 236 858
- US-B2- 10 081 305

## Description

### Technical Field

Generally, the present disclosure relates to systems for fastening an object to an attachment structure. More particularly, the present disclosure refers to systems comprising an attachment clip and an attachment structure for fastening an object to said attachment structure by said attachment clip.

### Technical Background

Various systems are known that serve the purpose of fastening an object to an attachment structure. In aviation for example, the cabin of an aircraft comprises devices to supply passengers with necessary functions, such as light, ventilation or oxygen in case of a loss of cabin pressure.

Respective functional units may cover passenger supply/service units (PSUs) or oxygen containers, for example, that may be stored in a so-called passenger supply channel (PSC) of the aircraft. The PSC usually comprises a rail to receive the respective PSUs, for example by hanging in or sliding in the respective PSU to the PSC.

However, during takeoff, flight and landing high acceleration forces may occur, exposing the PSUs to a risk of displacement on the rail. Therefore, it has been known to fasten the PSUs in position on the rail by means of a clamping block.

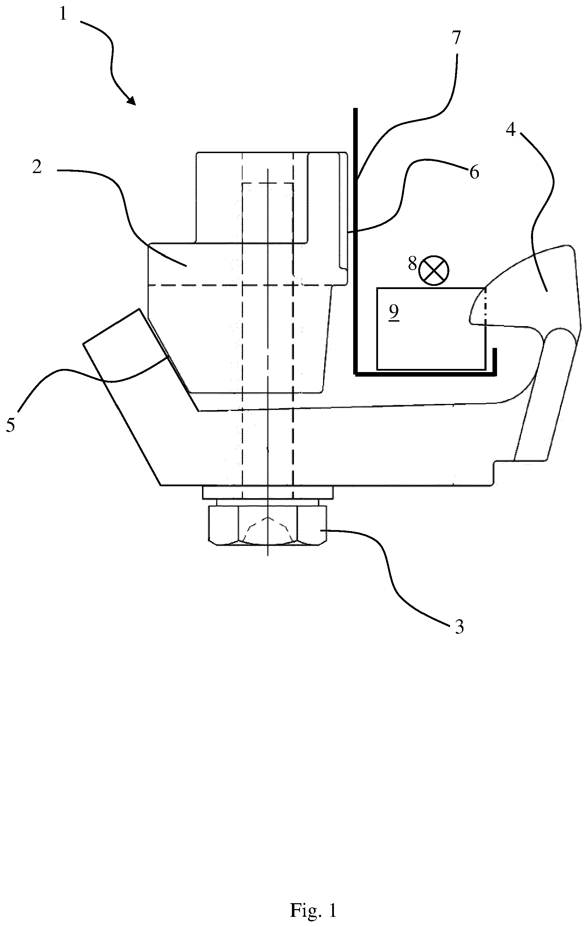

With respect to Fig. 1, such a conventional clamping block 1 comprises a brake block 2, a fastening screw 3 and a fastening hook 4. Upon fastening of the fastening screw 3, the brake block 2 will slide down an inclined surface 5 and thus a brake surface 6 will be pushed against a rail 7. At the same time, the fastening hook 4 will, in a longitudinal direction 8 of the rail 7, undercut a projection of a PSU 9 applied to the rail 7. Thus, the PSU 9 is securely fastened on the rail 7 the longitudinal direction 8.

Such clamping blocks consist of multiple parts that need to be manufactured and assembled and the overall effort is rather high. Assembly requires the use of additional tools, such as screw drivers. Due to the high mass of the respective parts. that are metal parts, the brake surface is relatively small, since the total mass is a critical design factor in aviation and limits the possible size of the clamping block.

FR 2 437 521 A1 relates to a double-clamp, advantageously made of plastic material, for attaching two profiled elements, each provided with at least one collar or flange, in particular a peripheral protection and/or decorative element, generally made of plastic material, of bodywork and a bodywork element made of sheet metal. The clip includes a U-shaped section, advantageously in the downward extension of the other flange, a gripping lug is provided.

### Summary

Based on that, it may be seen as an object of the present disclosure to suggest an alternative system for fastening an object to an attachment structure at low effort and low weight and at the same time at a high level of safety regarding the fastening function.

A system, methods of assembling and disassembling the system, as well as an aircraft are provided, according to the features of the independent claims. Further embodiments are evident from the dependent claims and from the following description.

According to the invention, according to claim 1, a system is provided comprising an attachment clip and an attachment structure. Said system is designed for fastening an object to said attachment structure by said attachment clip. The attachment structure comprises an attachment channel extending in a longitudinal direction. Said attachment channel comprises an inner channel surface and a guiding portion that is forming a guiding notch. Said guiding notch is open towards the inner channel surface and designed to guide an object along said longitudinal direction, if said object is engaged with said guiding notch. Further, the attachment clip comprises a hook portion with an upper hook portion and a lower hook portion in an S-type arrangement. The attachment clip further comprises a brake portion, wherein a cavity is formed between said brake portion and hook portion and said attachment clip is designed to be clipped onto said guiding portion by moving said cavity, transverse the longitudinal direction, to the guiding portion, wherein upon contacting said guiding portion the upper hook portion and the brake portion are spread apart under elastic deformation of the attachment clip. Further, said guiding portion is snapped into said cavity upon passing said upper hook portion under partial reversal of said elastic deformation, causing said upper hook portion to be pushed against the inner channel surface and said brake portion to be pulled towards said hook portion, thus applying a brake force to an outer surface of the attachment structure, while said upper hook portion is pushed against the inner channel surface and supported by the guiding portion.

The system comprises at least one object with an insertion portion designed to engage with the guiding notch of the guiding portion. In an embodiment, the insertion portion of the object is engaged with the guiding notch of the guiding portion and at the least one attachment clip is fastened to the attachment structure. This means, said system is in an assembled state.

The system of the present disclosure allows for easy and reliable fastening of an object to said attachment structure by said attachment clip, without requiring any tools. As elasticity of the attachment clip is exploited to achieve this, there are no additional parts required, such as screws or the like. This significantly reduces the effort to manufacture and handle such a system.

The object of the system may be a PSU or an oxygen container of an aircraft, to be attached in a PSC as the attachment channel. Such PSUs or oxygen containers may feature a mass of 1kg or 2kg, for example.

According to the invention, the system is designed to fasten the object in the longitudinal direction, if an acceleration of up to 9G occurs in the longitudinal direction and pushes said object against said attachment clip, while said insertion portion of said object is engaged with the guiding notch and said attachment clip is fastened to the attachment structure.

The expected acceleration together with the masses, geometries and materials of the different components of the system are maj or parameters to be considered by the person skilled in the art, based upon which he is able to dimension the system for the expected accelerations. The acceleration is considered up to 9G to design the system of the present disclosure in the context of an aircraft. However, this does not limit applicability of the present disclosure and the acceleration could even be higher, e.g. 10G, 11G or 12G in other applications.

Preferably, the attachment clip is a single part. Due to such a design, the brake portion is relatively larger regarding the overall size of the attachment clip, compared to the prior art. Preferably, the attachment clip is made of a plastic material, making it light in weight and less expensive than conventional metal solutions. The attachment clip may, for example, be manufactured by generative manufacturing, injection molding or extrusion. It may be manufactured in a continuous process, e.g. by extruding a continuous profile that can be cut into pieces to obtain single part attachment clips. These manufacturing methods also enable easy scalability of the attachment clip, for example by adapting a cut-off length of the extruded profile.

The attachment clip can thus be manufactured at low effort and time and requires less material and costs.

Preferably, said brake portion, at least in a section designed to apply the brake force to the outer surface of the attachment structure, is surface treated or coated to enhance friction on said outer surface. Alternatively, or in addition said outer surface may at least sectionally be surface treated or coated to enhance friction on the brake portion.

Both said design options allow further reduction of the required size of the brake portion, because a coefficient of friction is increased.

Preferably, the object comprises a recess, through which an attachment clip, fastened to the attachment structure, extends.

Thus, the object can be safely fastened by a single attachment clip in positive and negative longitudinal direction.

Also, an attachment clip may be fastened to the attachment structure along the longitudinal direction in front and/or behind said insertion portion.

This allows for a flexible arrangement of the attachment clip according to the requirements of the object. Also, a plurality of attachment clips may be used to fasten one or more objects in the system of the present disclosure.

Preferably, said object comprises an attachment portion that is complementary to said attachment channel and comprises the insertion portion. For example, said attachment channel may be designed in the manner of a slotted construction profile and the attachment portion may be designed in the manner of a corresponding slot-nut.

This achieves a very comfortable and secure guidance of the object in the attachment channel.

Another aspect of the present disclosure refers to a method of assembling a system according to the present disclosure. Said method, according to claim 9, comprises the following steps:
- Engaging an insertion portion of an object with a guiding notch of a guiding portion of an attachment channel, comprised by an attachment structure;
- Moving a cavity of an attachment clip, formed between a brake portion and a hook portion, transverse a longitudinal direction of said attachment channel to said guiding portion, wherein upon contacting said guiding portion, an upper hook portion of said hook portion and the brake portion are spread apart under elastic deformation of the attachment clip; and
- Snapping said guiding portion into said cavity, upon passing said upper hook portion, under partial reversal of said elastic deformation causing said upper hook portion to be pushed against an inner channel surface of said attachment channel and said brake portion to be pulled towards said hook portion, thus applying a brake force to an outer surface of the attachment structure, while said upper hook portion is pushed against the inner channel surface and supported by the guiding portion.

Further, an aspect of the present disclosure refers to a method of disassembling a system according to the present disclosure that is in an assembled state. The method, according to claim 10, comprises
the following steps:
- Spreading apart a hook portion and a brake portion of an attachment clip that is fastened to an attachment structure, until a brake force applied by the brake portion to an outer surface of said attachment structure has been reduced to a level allowing manual displacement of said attachment clip in a longitudinal direction along a guiding portion of said attachment channel; and
- Sliding said attachment clip off said guiding portion in the longitudinal direction, either together with an object fastened to said attachment structure by said attachment clip or under disengagement of an insertion portion of said object from said attachment structure prior to sliding off said attachment clip.

Yet another aspect of the present disclosure refers to an aircraft, comprising a system according to the present disclosure.

In other words, the subject matter of the present disclosure can be used in the passenger supply channel of an aircraft. The presented design is specifically created to fit passenger aircrafts. However, by adapting the design the present disclosure can be also used in other aircrafts or in the context of attachment tasks outside aviation. In an aircraft, conventional clamping blocks have been used as an "x-stop", for example to fasten PSUs or an oxygen container in x-direction of a PSC. These conventional clamping blocks are made from metal and consist of multiple small parts. All of them work by manually locking the part in place (e.g. with a screw) using a tool. The material of the present disclosure is preferably plastic, a lighter and less expensive material than the previously known solutions. Further, (de-) installation is greatly improved by the present disclosure. Installation can be done without the use of any tool, merely by clicking the clamping block in the intended position. Also, deinstallation is possible without any tools. The present disclosure relates to a clamping block (attachment clip) made from a single piece of plastic material. By using the material elasticity and a specific design, the clamping block clicks into the intended position, without the need for a separate tool. To use this attachment principle, the material of the clamping block shall be elastic, preferably some kind of plastic material that stays in the elastic region while being (de-)installed and also in its attached state. For the presented design, "Ultem 9085" can be used to withstand an acceleration of the aircraft of 9G. However, the present disclosure is not limited to this material. There may be a cut-out in the attachment system of the PSC component (e.g. PSU or oxygen container) through that the clamping block can be attached to the PSC. The surface of the system can (partly) be treated or coated to improve the resistance against displacement due to higher friction. As no tools are needed for (de-)installation, the present disclosure immensely simplifies installation of components in the PSC and reduces (de-)installation time and costs. Further the present disclosure refers to a clamping block consisting of one single plastic part, which can be (e.g.) injection molded or manufactured as a continuous extruded profile. This simplifies manufacturing processes. Material switch from metal to plastic further decreases production and part costs. Further, the material change from metal to plastic and the decreased part size/volume of the present disclosure, compared to the formerly known solutions, decreases the mass of the clamping block. The clamping block may be used to prevent PSC components from delocation. It is attached in a cut-out in the attachment interface of the component to be attached to the PSC and applies a force on the rail of the PSC. The force is generated by elastic deformation of the clamping block, as it is attached to the rail. For installation of the clamping block, it is pressed on the rail from below. Due to its material elasticity and its special design the clamping block clicks into position. During installation the deformation of the clamping block shall not exceed the material elasticity range, in order to maintain its shape and to ensure the clamping force. For deinstallation, the clamping block can be removed by sliding it off the rail. This may be done by temporarily changing the shape of the clamping block, for example by applying a force from the top or side, by pressing parts of the clamping block against the rail and/or by changing the angle between the clamping block and rail. The special design of the clamping block enables simple deinstallation.

In short, the present disclosure refers to a system comprising a clamping block (attachment clip) in an aircraft that is used as a stop for passenger supply units and oxygen containers, in a passenger supply channel along the flight direction. The clamping block is made of plastic and features a single piece design. Installation can be done without the use of a tool by clicking the clamping block onto the passenger supply channel in an intended position.

### Brief description of the drawings

The subject-matter of the present disclosure will hereinafter be described in conjunction with the following figures, wherein like numerals denote like elements, and wherein:
- Fig. 1: shows a clamping block according to the state of the art;
- Fig. 2: shows a system for fastening an object to an attachment structure by an attachment clip with reference to methods of assembling and disassembling said system;
- Fig. 3: shows an embodiment of an attachment clip; and
- Fig. 4: shows a system for fastening an object to an attachment structure by an attachment clip in another embodiment.

### Detailed description of exemplary embodiments

Fig. 1 shows a clamping block 1 according to the state of the art, as described above in the technical background of the present disclosure.

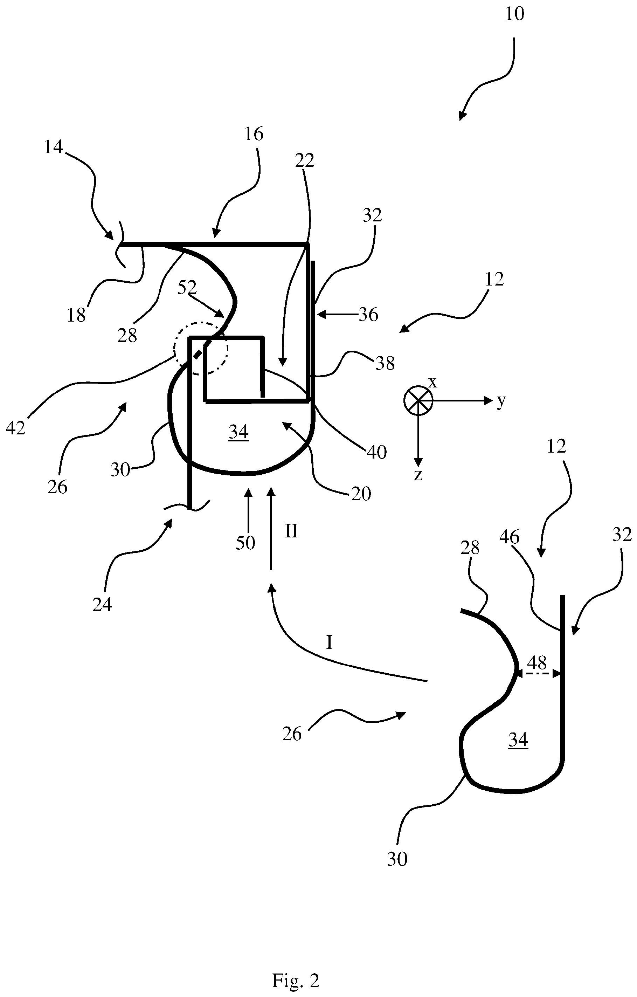

Fig. 2 shows a system 10 for fastening an object 24 to an attachment structure 14 by an attachment clip 12. In a basic embodiment, said system 10 comprises the attachment clip 12 and the attachment structure 14, said embodiment being illustrated by Fig. 2 in the manner of a sketch of its functional principle. Apart from the physical structures described herein, Fig. 2 is therefore not showing any essential physical design and may be varied based on the outlined principles.

The attachment structure 14 comprises an attachment channel 16. A channel in this context refers to any cross-sectional profile extending in a longitudinal direction x, said cross-sectional profile surrounding a certain area, but not being entirely closed. Said attachment channel 16 comprises an inner channel surface 18, which means a surface directed to the area surrounded by the cross-sectional profile of the attachment channel 16. Further, the attachment channel 16 comprises a guiding portion 20 that is forming a guiding notch 22. The guiding portion 20 refers to the material of the attachment channel 16 that surrounds the guiding notch 22, the latter being an area free of material. Said guiding notch 22 is open towards the inner channel surface 18 and designed to guide an object 24 along said longitudinal direction x, if said object 24 is engaged with said guiding notch 22.

In the basic embodiment, said system 10 does not comprise said object 24 and is merely designed to be suitable for fastening an object 24, that may be added, to said attachment structure 14 by said attachment clip 12. However, in the following the system 10 is also described in an embodiment wherein it comprises the object 24. Still, the following remains valid also for the basic embodiment of the system 10.

The attachment clip 12 of the system 10 comprises a hook portion 26 with an upper hook portion 28 and a lower hook portion 30. The upper hook portion 28 and lower hook portion 30 are arranged in an S-type manner, which means they are curved in opposite directions and connected in an inflection point. Further, the attachment clip 12 comprises a brake portion 32, wherein a cavity 34 is formed between said brake portion 32 and said hook portion 26. As a consequence of said upper hook portion 28 and lower hook portion 30 being arranged in an S-type manner, there is a minimum distance 48 between said upper hook portion 28 and said brake portion 32. Said minimum distance 48 may vary in value, e.g. if the attachment clip 12 is elastically deformed. However, due to the S-type of shape of the hook portion 26, said minimum distance 48 always remains the smallest distance between the hook portion 26 and the brake portion 32.

The attachment clip 12 is designed to be clipped onto said guiding portion 20. According to the design of the attachment clip 12 this can be achieved by moving, e.g. by handling, said cavity 34 transverse the longitudinal direction x to the guiding portion 20. This is illustrated by a step I in Fig. 2.

Upon contacting said guiding portion 20, which means when the guiding portion 20 contacts the upper hook portion 28 and the brake portion 32 due to said movement, the upper hook portion 28 and the brake portion 32 are spread apart under elastic deformation of the attachment clip 12. This is due to the force applied by the guiding portion 20 to the upper hook portion 28 and the brake portion 32, as a consequence of the movement.

Then (illustrated in Fig. 2 as a step II), the guiding portion 20 snaps into said cavity 34 upon passing said upper hook portion 28, which means the guiding portion 20 passes the minimum distance 48. This causes partial reversal of said elastic deformation, because the guiding portion 20 does not spread apart the upper hook portion 28 and the brake portion 32 to the same extent anymore. In other words, the brake portion 32 and the hook portion 26 are pulled towards each other, which is indicated by a force 36 and a force 52 in Fig. 2.

As the guiding portion 20 is now present in the cavity 34, it also causes the upper hook portion 28 to push onto said guiding portion 20 at a point, somewhere between the location of the minimum distance 48 and the lower hook portion 30. This is driven by the energy stored in the attachment clip 12 due to the elastic deformation, which is partially released upon partial reversal of said deformation. This pushing onto said guiding portion 20 causes the entire attachment clip 12, driven by said released energy, to be pushed upwards. This is indicated by force 50 in Fig. 2. Upwards here means towards said guiding portion 20 and transverse said longitudinal direction x. Merely as an example, this corresponds to a negative direction z in Fig. 2.

It shall be understood, that depending on a specific geometry of the guiding portion 20 and the hook portion 26, which may vary in different embodiments, the lower hook portion 30 may also push onto said guiding portion 20 and drive the attachment clip 12 upwards.

The described effect of said attachment clip 12 being pushed upwards further causes said upper hook portion 28 to contact the inner channel surface 18 and to be pushed against it. Thus, said attachment clip 12 has found its final position transverse said longitudinal direction x on the attachment channel 16.

As the elastic deformation is only reversed partially, said brake portion 32 is further pulled towards said hook portion 26 by the forces 36 and 52. Thus, the brake portion 32 applies the force 36 as a brake force to an outer surface 38 of the attachment structure 14. At the same time, said upper hook portion 28 continues to be pushed against the inner channel surface 18, while being supported by the guiding portion 20 that serves as a counter bearing to force 52 in a section 42.

In this embodiment, the system 10 comprises the object 24. The object 24 has an insertion portion 40 that is engaged with the guiding notch 22 of the guiding portion 20 so that the object 24 may slide along the longitudinal direction x.

However, as can be seen in section 42, projections of the attachment clip 12 and the object 24 along the longitudinal direction x are overlapping. This means, said attachment clip 12 is forming a conflicting contour, if said object 24 attempts to slide along the longitudinal direction x and hits said attachment clip 12. Thus, the attachment clip 12 fastens said object 24 to the attachment structure 14 in the longitudinal direction x.

The attachment clip 12 may be placed in front or behind the object 24 in longitudinal direction x. There may be more than one attachment clip 12, which means there could be an attachment clip 12 placed in front and behind the object 24, as well. Thus, the object 24 can be fastened totally in longitudinal direction x.

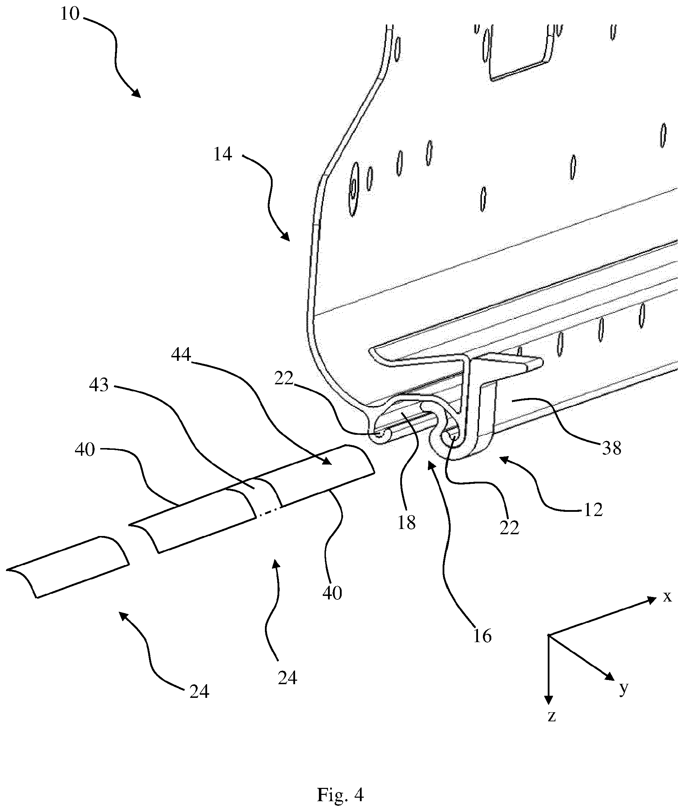

Preferably, the object 24 may comprise a recess that is not visible in Fig. 2 but indicated in section 42 (also compare Fig. 4, ref. 43). The attachment clip 12 may extend through said recess, as indicated in section 42 by the interrupted line illustrating the attachment clip 12. Thus, the object 24 can be totally fastened in longitudinal direction x by a single attachment clip 12. Thus, the object 24 can be fastened totally in longitudinal direction x by a single attachment clip 12.

With reference to methods of assembling and disassembling said system 10, the above configurations may be achieved as follows:
To assemble the system 10 in the basic embodiment, steps I and II can be carried out directly.

In embodiments wherein the object 24 is comprised by the system 10, the insertion portion 40 of the object 24 may first be engaged with the guiding notch 22 of the guiding portion 20 and then the steps I and II may be carried out. The object 24 may be hung into the attachment channel 16 (into the guiding notch 22, respectively) or the object 24 may be slidden into the attachment channel 16 (into the guiding notch 22, respectively). Steps I and II may then be carried out by applying the attachment clip 12 to the guiding portion 20 via a recess in the object 24 or by placing the attachment clip 12 in front or behind the object 24.

It is also possible to carry out steps I and II first and then engage the insertion portion 40 of the object 24 with the guiding notch 22. Then, the object 24 may be slidden into the attachment channel 16, for example until it hits the attachment clip 12. If the attachment clip 12 shall be arranged in a recess of the object 24, however, the object 24 needs to be hung into the attachment channel 16, if steps I and II have been carried out first.

To disassemble the system 10, the hook portion 26 and a brake portion 32 are spread apart, for example manually or by a simple tool, until the brake force 36 acting on the outer surface 38 has been reduced to a level allowing manual displacement of the attachment clip 12 along the longitudinal direction x.

Then, the attachment clip 12 is slidden off said guiding portion 20 along the longitudinal direction x. This may be done together with the object 24, which means the object 24 is slidden off the guiding notch 22 at the same time. Alternatively, the insertion portion 40 of said object 24 may be disengaged from said guiding notch 22 first, e.g. by sliding the object 24 off the guiding notch 22 or by unhinging the object 24 from the guiding notch 22.

The system 10 is designed to fasten said object 24 in the longitudinal direction x so that it can stand an acceleration of at least 9G occurring in the longitudinal direction x, without displacement of said object 24 and the attachment clip 12, respectively. Thus, it is particularly suitable to be used in an aircraft.

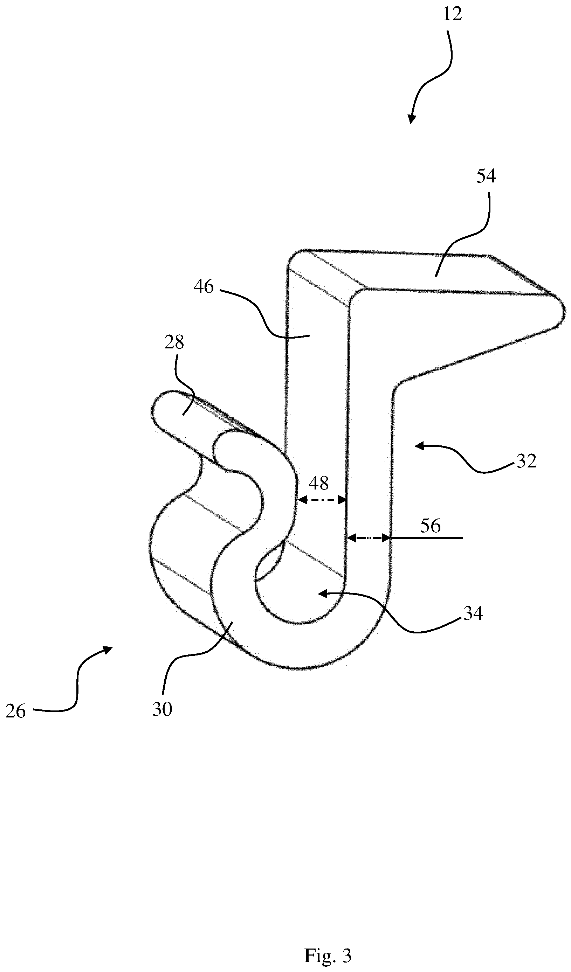

Fig. 3 shows an embodiment of the attachment clip 12 that is particularly suitable to be used in an aircraft, but not limited to that.

The attachment clip 12 in Fig. 3 is a single part, comprising the brake portion 32, the hook portion 26 and the cavity 34 therebetween. For improved handling, the brake portion 32 comprises a nose 54. The nose 54 may be accessed by hand or a tool to assemble or disassemble the attachment clip 12 in the system 10 (e.g. as shown in Fig. 2 or 4).

The upper hook portion 28, the lower hook portion 30 and the brake portion 32 (but not necessarily the nose 54) may comprise a material strength 56 of 1 mm to 3 mm, preferably 1,5 mm to 2,5 mm. For example, the material strength may be 1 mm, 1,5 mm, 2 mm, 2,5 mm or 3 mm. The minimum distance 48 may range from once to twice the material strength 56, if the attachment clip 12 is not deformed. For example, the minimum distance 48 may be once the material strength 56 or twice the material strength 56, if the attachment clip 12 is not deformed.

Fig. 3 implies embodiments of the attachment clip 12 at true scale, but is not limited to that. In particular, Fig. 3 may be understood representing a true scale based on the above parameters material strength 56 and minimum distance 48.

Experiments have shown that the above parameters are particularly beneficial, if the attachment clip 12 is to be used in an aircraft, for example, in the case that typical PSUs shall be fastened by the system 10 in an aircraft. Such PSUs may feature a mass of 1 kg to 2kg, for example 1kg, 1,5 kg or 2kg.

The attachment clip 12 of Fig. 3 or in other embodiments may be made of a plastic material, for example a thermoplastic material, such as "Ultem 9085". The attachment clip 12 may be manufactured by injection molding or extrusion.

To design the attachment clip 12 to resist high acceleration in the system 10, said brake portion 32 may comprise at least a section 46 that is surface treated or coated to enhance a coefficient of friction. In case of a coating, the attachment clip 12 may not be single part anymore.

It is also possible to, at least sectionally, surface treat or coat the outer surface 38 of the attachment structure 14 (compare Figs. 2 and 4) to enhance a coefficient of friction, which is further described with reference to Fig. 4.

Preferably, the section 46 of the brake portion 32 of the attachment clip 12 and/or the outer surface 38 of the attachment structure 14 are surface treated or coated to enhance friction between the brake portion 32 and the outer surface 38 in the context of the system 10.

Fig. 4 shows a system 10 for fastening an object 24 to an attachment structure 14 by an attachment clip 12 in another embodiment. This embodiment may comprise the features described by Fig. 1. Further, the system 10 in Fig. 4 comprises an attachment clip 12 as shown in Fig. 3.

As can be seen in Fig. 4, the object 24 comprises an attachment portion 44 that is complementary to the attachment channel 16 and comprises the insertion portion 40. In Fig. 4, the object 24 is illustrated in a simplified manner by showing only the attachment portion 44.

"Complementary" preferably implies that the shape of the attachment portion 44 essentially follows the contour of the inner channel surface 18, while the attachment portion 44 is inserted to the attachment channel 16 along the longitudinal direction x, whereby the insertion portion 40 slides along the guiding notch 22. This provides the advantage, that all degrees of freedom, except for movement in the longitudinal direction x, are disabled by the attachment channel 16. Thus, the object 24 can be safely positioned.

However, in other embodiments "complementary" may merely imply that the attachment portion 44 fits into the space limited by the inner channel surface 18, but without disabling all those degrees of freedom. Further, the attachment channel 16 may comprise only one guiding notch 22 and the object 24 may comprise only one insertion portion 40 in other embodiments.

Turing back to the embodiment illustrated in Fig. 4, said attachment channel 16 is designed in the manner of a slotted construction profile and the attachment portion 44 is designed in the manner of a corresponding slot-nut. In this example, the attachment channel 16 is designed in the manner of a T-slotted profile, also referred to as a T-slot structural framing, and the attachment portion 44 is designed in the manner of a T-slot-nut.

In Fig. 4, there are two objects 24 shown, merely as examples. One of those objects 24 has a recess 43, to which the attachment clip 12 can be introduced, once said object 24 has been slidden into the attachment channel 16. The recess 43 may be open or closed in the direction of the insertion portion 40, as indicated by the dash-dotted line. The other object 24 is illustrated without any recess. If such an object 24 without a recess is introduced to the attachment channel 16, the attachment clip 12 may be arranged in front or behind said object 24 (regarding the longitudinal direction x).

### Reference numerals

- 10: system
- 12: attachment clip
- 14: attachment structure
- 16: attachment channel
- 18: inner channel surface
- 20: guiding portion
- 22: guiding notch
- 24: object
- 26: hook portion
- 28: upper hook portion
- 30: lower hook portion
- 32: brake portion
- 34: cavity
- 36: force
- 38: outer surface
- 40: insertion portion
- 42: recess
- 44: attachment portion
- 46: section
- 48: minimum distance
- 50: force
- 52: force
- 54: nose
- 56: material strength
- x: longitudinal direction

- I: step
- II: step

## Claims

1. System (10), comprising an attachment clip (12), an attachment structure (14) and at least one object (24), said system (10) being designed for fastening the object (24) to said attachment structure (14) by said attachment clip (12), wherein:
- the attachment structure (14) comprises an attachment channel (16) extending in a longitudinal direction (x), said attachment channel (16) comprising an inner channel surface (18) and a guiding portion (20) that is forming a guiding notch (22), said guiding notch (22) being open towards the inner channel surface (18) and designed to guide the object (24) along said longitudinal direction (x), if said object (24) is engaged with said guiding notch (22);
- the at least one object has an insertion portion (40) designed to engage with the guiding notch (22) of the guiding portion (20); and
- the attachment clip (12) comprises a hook portion (26) with an upper hook portion (28) and a lower hook portion (30) in an S-type arrangement, and further comprises a brake portion (32), wherein a cavity (34) is formed between said brake portion (32) and hook portion (26) and said attachment clip (12) is designed to be clipped onto said guiding portion (20) by:
- moving said cavity (34), transverse the longitudinal direction (x), to the guiding portion (20), wherein upon contacting said guiding portion (20) the upper hook portion (28) and the brake portion (32) are spread apart under elastic deformation of the attachment clip (12); and
- snapping said guiding portion (20) into said cavity (34) upon passing said upper hook portion (28) under partial reversal of said elastic deformation, causing said upper hook portion (28) to be pushed against the inner channel surface (18) and said brake portion (32) to be pulled towards said hook portion (26), thus applying a brake force (36) to an outer surface (38) of the attachment structure (14), while said upper hook portion (28) is pushed against the inner channel surface (18) and supported by the guiding portion (20);
said system (10) being designed to fasten said object (24) in the longitudinal direction (x), if an acceleration of up to 9G occurs in the longitudinal direction (x) and pushes said object (24) against said attachment clip (12), while said insertion portion (40) of said object (24) is engaged with the guiding notch (22) and said attachment clip (12) is fastened to the attachment structure (14).

2. System (10) according to claim 1, wherein the insertion portion (40) of the object (24) is engaged with the guiding notch (22) of the guiding portion (20) and the at least one attachment clip (12) is fastened to the attachment structure (14).

3. System (10) according to claim 2, wherein the object (24) comprises a recess (42), through which the at least one attachment clip (12), fastened to the attachment structure (14), extends.

4. System (10) according to claim 2 or 3, wherein, along the longitudinal direction (x), the attachment clip (12) is fastened to the attachment structure (14) in front and/or behind said insertion portion (40).

5. System (10) according to any of the preceding claims, wherein said object (24) comprises an attachment portion (44) that is complementary to said attachment channel (16) and comprises the insertion portion (40).

6. System (10) according to claim 5, wherein said attachment channel (16) is designed in the manner of a slotted construction profile and the attachment portion (44) is designed in the manner of a corresponding slot-nut.

7. System (10) according to any of the preceding claims, wherein the attachment clip (12) is a single part.

8. System (10) according to any of the preceding claims, wherein said brake portion (32), at least in a section (46) designed to apply the brake force (36) to the outer surface (38) of the attachment structure (14), is surface treated or coated to enhance friction on said outer surface (38) and/or said outer surface (38) is at least sectionally surface treated or coated to enhance friction on the brake portion (32).

9. Method of assembling a system (10) according to any of the claims 2 to 8, comprising the following steps:
- Engaging an insertion portion (40) of an object (24) with a guiding notch (22) of a guiding portion (20) of an attachment channel (16), comprised by an attachment structure (14);
- Moving a cavity (34) of an attachment clip (12), formed between a brake portion (32) and a hook portion (26), transverse a longitudinal direction (x) of said attachment channel (16) to said guiding portion (20), wherein upon contacting said guiding portion (20), an upper hook portion (28) of said hook portion (26) and the brake portion (32) are spread apart under elastic deformation of the attachment clip (12); and
- Snapping said guiding portion (20) into said cavity (34), upon passing said upper hook portion (28), under partial reversal of said elastic deformation causing said upper hook portion (28) to be pushed against an inner channel surface (18) of said attachment channel (16) and said brake portion (32) to be pulled towards said hook portion (26), thus applying a brake force (36) to an outer surface (38) of the attachment structure (14), while said upper hook portion (28) is pushed against the inner channel surface (18) and supported by the guiding portion (20).

10. Method of disassembling a system (10) according to any of the claims 2 to 8, comprising the following steps:
- Spreading apart a hook portion (26) and a brake portion (32) of an attachment clip (12) that is fastened to an attachment structure (14), until a brake force (36) applied by the brake portion (32) to an outer surface (38) of said attachment structure (14) has been reduced to a level allowing manual displacement of said attachment clip (12) in a longitudinal direction (x) along a guiding portion (20) of said attachment channel (16); and
- Sliding said attachment clip (12) off said guiding portion (20) in the longitudinal direction (x), either together with an object (24) fastened to said attachment structure (14) by said attachment clip (12) or under disengagement of an insertion portion (40) of said object (24) from said attachment structure (14) prior to sliding off said attachment clip (12).

11. Aircraft, comprising a system (10) according to any of the claims 1 to 8.

## Patentansprüche

1. System (10), umfassend einen Befestigungsclip (12), eine Befestigungsstruktur (14) und mindestens einen Gegenstand (24), wobei das System (10) zum Befestigen des Gegenstands (24) an der Befestigungsstruktur (14) durch den Befestigungsclip (12) ausgebildet ist, wobei:
∘ die Befestigungsstruktur (14) einen Befestigungskanal (16) umfasst, der sich in einer Längsrichtung (x) erstreckt, wobei der Befestigungskanal (16) eine Kanalinnenfläche (18) und einen Führungsabschnitt (20) umfasst, der eine Führungsnut (22) bildet, wobei die Führungsnut (22) zur Kanalinnenfläche (18) hin offen ist und dafür ausgebildet ist, den Gegenstand (24) entlang der Längsrichtung (x) zu führen, wenn der Gegenstand (24) mit der Führungsnut (22) in Eingriff steht;
∘ der mindestens eine Gegenstand einen Einführabschnitt (40) aufweist, der dafür ausgebildet ist, mit der Führungsnut (22) des Führungsabschnitts (20) in Eingriff zu stehen; und
∘ der Befestigungsclip (12) einen Hakenabschnitt (26) mit einem oberen Hakenabschnitt (28) und einem unteren Hakenabschnitt (30) in einer S-förmigen Anordnung umfasst, und ferner einen Bremsabschnitt (32) umfasst, wobei ein Hohlraum (34) zwischen dem Bremsabschnitt (32) und dem Hakenabschnitt (26) gebildet ist und der Befestigungsclip (12) dafür ausgebildet ist, auf den Führungsabschnitt (20) aufgeclipst zu werden durch:
▪ Bewegen des Hohlraums (34), quer zur Längsrichtung (x), zu dem Führungsabschnitt (20), wobei bei Kontaktieren des Führungsabschnitts (20) der obere Hakenabschnitt (28) und der Bremsabschnitt (32) unter elastischer Verformung des Befestigungsclips (12) auseinandergespreizt werden; und
▪ Einschnappen des Führungsabschnitts (20) in den Hohlraum (34) beim Passieren des oberen Hakenabschnitts (28) unter teilweiser Umkehrung der elastischen Verformung, was bewirkt, dass der obere Hakenabschnitt (28) gegen die Kanalinnenfläche (18) gedrückt wird und der Bremsabschnitt (32) zum Hakenabschnitt (26) hin gezogen wird, wodurch eine Bremskraft (36) auf eine Außenfläche (38) der Befestigungsstruktur (14) aufgebracht wird, während der obere Hakenabschnitt (28) gegen die Kanalinnenfläche (18) gedrückt und durch den Führungsabschnitt (20) abgestützt wird;
wobei das System (10) dafür ausgebildet ist, den Gegenstand (24) in der Längsrichtung (x) zu befestigen, wenn eine Beschleunigung von bis zu 9G in der Längsrichtung (x) auftritt und den Gegenstand (24) gegen den Befestigungsclip (12) drückt, während der Einführabschnitt (40) des Gegenstands (24) mit der Führungsnut (22) in Eingriff steht und der Befestigungsclip (12) an der Befestigungsstruktur (14) befestigt ist.

2. System (10) nach Anspruch 1, wobei der Einführabschnitt (40) des Gegenstands (24) mit der Führungsnut (22) des Führungsabschnitts (20) in Eingriff steht und der mindestens eine Befestigungsclip (12) an der Befestigungsstruktur (14) befestigt ist.

3. System (10) nach Anspruch 2, wobei der Gegenstand (24) eine Aussparung (42) umfasst, durch die sich der mindestens eine an der Befestigungsstruktur (14) befestigte Befestigungsclip (12) erstreckt.

4. System (10) nach Anspruch 2 oder 3, wobei der Befestigungsclip (12) entlang der Längsrichtung (x) vor und/oder hinter dem Einführabschnitt (40) an der Befestigungsstruktur (14) befestigt ist.

5. System (10) nach einem der vorhergehenden Ansprüche, wobei der Gegenstand (24) einen Befestigungsabschnitt (44) umfasst, der komplementär zu dem Befestigungskanal (16) ist und den Einführabschnitt (40) umfasst.

6. System (10) nach Anspruch 5, wobei der Befestigungskanal (16) nach Art eines Nutprofils ausgebildet ist und der Befestigungsabschnitt (44) nach Art eines entsprechenden Nutensteins ausgebildet ist.

7. System (10) nach einem der vorhergehenden Ansprüche, wobei der Befestigungsclip (12) einstückig ist.

8. System (10) nach einem der vorhergehenden Ansprüche, wobei der Bremsabschnitt (32) zumindest in einem Abschnitt (46), der dafür ausgebildet ist, die Bremskraft (36) auf die Außenfläche (38) der Befestigungsstruktur (14) aufzubringen, oberflächenbehandelt oder beschichtet ist, um die Reibung an der Außenfläche (38) zu erhöhen, und/oder die Außenfläche (38) zumindest abschnittsweise oberflächenbehandelt oder beschichtet ist, um die Reibung an dem Bremsabschnitt (32) zu erhöhen.

9. Verfahren zum Montieren eines Systems (10) nach einem der Ansprüche 2 bis 8, umfassend die folgenden Schritte:
∘ Ineingriffbringen eines Einführabschnitts (40) eines Gegenstands (24) mit einer Führungsnut (22) eines Führungsabschnitts (20) eines Befestigungskanals (16), der von einer Befestigungsstruktur (14) umfasst ist;
∘ Bewegen eines Hohlraums (34) eines Befestigungsclips (12), der zwischen einem Bremsabschnitt (32) und einem Hakenabschnitt (26) gebildet ist, quer zu einer Längsrichtung (x) des Befestigungskanals (16) zu dem Führungsabschnitt (20), wobei bei Kontaktieren des Führungsabschnitts (20) ein oberer Hakenabschnitt (28) des Hakenabschnitts (26) und der Bremsabschnitt (32) unter elastischer Verformung des Befestigungsclips (12) auseinandergespreizt werden; und
∘ Einschnappen des Führungsabschnitts (20) in den Hohlraum (34) beim Passieren des oberen Hakenabschnitts (28) unter teilweiser Umkehrung der elastischen Verformung, was bewirkt, dass der obere Hakenabschnitt (28) gegen eine Kanalinnenfläche (18) des Befestigungskanals (16) gedrückt wird und der Bremsabschnitt (32) zum Hakenabschnitt (26) hin gezogen wird, wodurch eine Bremskraft (36) auf eine Außenfläche (38) der Befestigungsstruktur (14) aufgebracht wird, während der obere Hakenabschnitt (28) gegen die Kanalinnenfläche (18) gedrückt und durch den Führungsabschnitt (20) abgestützt wird.

10. Verfahren zum Demontieren eines Systems (10) nach einem der Ansprüche 2 bis 8, umfassend die folgenden Schritte:
∘ Auseinanderspreizen eines Hakenabschnitts (26) und eines Bremsabschnitts (32) eines Befestigungsclips (12), der an einer Befestigungsstruktur (14) befestigt ist, bis eine durch den Bremsabschnitt (32) auf eine Außenfläche (38) der Befestigungsstruktur (14) aufgebrachte Bremskraft (36) auf ein Niveau reduziert wurde, das ein manuelles Verschieben des Befestigungsclips (12) in einer Längsrichtung (x) entlang eines Führungsabschnitts (20) des Befestigungskanals (16) ermöglicht; und
∘ Abziehen des Befestigungsclips (12) von dem Führungsabschnitt (20) in der Längsrichtung (x), entweder zusammen mit einem Gegenstand (24), der durch den Befestigungsclip (12) an der Befestigungsstruktur (14) befestigt ist, oder unter Außereingriffbringen eines Einführabschnitts (40) des Gegenstands (24) von der Befestigungsstruktur (14) vor dem Abziehen des Befestigungsclips (12).

11. Luftfahrzeug, umfassend ein System (10) nach einem der Ansprüche 1 bis 8.

## Revendications

1. Système (10), comprenant une agrafe de fixation (12), une structure de fixation (14) et au moins un objet (24), ledit système (10) étant conçu pour fixer l'objet (24) à ladite structure de fixation (14) par ladite agrafe de fixation (12), dans lequel :
∘ la structure de fixation (14) comprend un canal de fixation (16) s'étendant dans une direction longitudinale (x), ledit canal de fixation (16) comprenant une surface interne de canal (18) et une partie de guidage (20) formant une rainure de guidage (22), ladite rainure de guidage (22) étant ouverte vers la surface interne de canal (18) et conçue pour guider l'objet (24) le long de ladite direction longitudinale (x), si ledit objet (24) est en prise avec ladite rainure de guidage (22) ;
∘ l'au moins un objet présente une partie d'insertion (40) conçue pour venir en prise avec la rainure de guidage (22) de la partie de guidage (20) ; et
∘ l'agrafe de fixation (12) comprend une partie crochet (26) avec une partie crochet supérieure (28) et une partie crochet inférieure (30) selon un agencement en S, et comprend en outre une partie frein (32), une cavité (34) étant formée entre ladite partie frein (32) et la partie crochet (26) et ladite agrafe de fixation (12) étant conçue pour être clippée sur ladite partie de guidage (20) par :
▪ déplacement de ladite cavité (34), de manière transversale à la direction longitudinale (x), vers la partie de guidage (20), dans lequel lors d'un contact avec ladite partie de guidage (20), la partie crochet supérieure (28) et la partie frein (32) sont écartées sous déformation élastique de l'agrafe de fixation (12) ; et
▪ encliquetage de ladite partie de guidage (20) dans ladite cavité (34) lors du passage de ladite partie crochet supérieure (28) sous inversion partielle de ladite déformation élastique, provoquant la poussée de ladite partie crochet supérieure (28) contre la surface interne de canal (18) et la traction de ladite partie frein (32) vers ladite partie crochet (26), appliquant ainsi une force de freinage (36) sur une surface externe (38) de la structure de fixation (14), tandis que ladite partie crochet supérieure (28) est poussée contre la surface interne de canal (18) et supportée par la partie de guidage (20) ;
ledit système (10) étant conçu pour fixer ledit objet (24) dans la direction longitudinale (x), si une accélération allant jusqu'à 9G se produit dans la direction longitudinale (x) et pousse ledit objet (24) contre ladite agrafe de fixation (12), tandis que ladite partie d'insertion (40) dudit objet (24) est en prise avec la rainure de guidage (22) et que ladite agrafe de fixation (12) est fixée à la structure de fixation (14).

2. Système (10) selon la revendication 1, dans lequel la partie d'insertion (40) de l'objet (24) est en prise avec la rainure de guidage (22) de la partie de guidage (20) et l'au moins une agrafe de fixation (12) est fixée à la structure de fixation (14).

3. Système (10) selon la revendication 2, dans lequel l'objet (24) comprend un évidement (42) à travers lequel l'au moins une agrafe de fixation (12), fixée à la structure de fixation (14), s'étend.

4. Système (10) selon la revendication 2 ou 3, dans lequel, le long de la direction longitudinale (x), l'agrafe de fixation (12) est fixée à la structure de fixation (14) devant et/ou derrière ladite partie d'insertion (40).

5. Système (10) selon l'une quelconque des revendications précédentes, dans lequel ledit objet (24) comprend une partie de fixation (44) qui est complémentaire audit canal de fixation (16) et comprend la partie d'insertion (40).

6. Système (10) selon la revendication 5, dans lequel ledit canal de fixation (16) est conçu à la manière d'un profilé de construction à rainure et la partie de fixation (44) est conçue à la manière d'un coulisseau correspondant.

7. Système (10) selon l'une quelconque des revendications précédentes, dans lequel l'agrafe de fixation (12) est d'une seule pièce.

8. Système (10) selon l'une quelconque des revendications précédentes, dans lequel ladite partie frein (32), au moins dans une section (46) conçue pour appliquer la force de freinage (36) sur la surface externe (38) de la structure de fixation (14), subit un traitement de surface ou est revêtue pour augmenter le frottement sur ladite surface externe (38) et/ou ladite surface externe (38) subit au moins en partie un traitement de surface ou est revêtue pour augmenter le frottement sur la partie frein (32).

9. Procédé d'assemblage d'un système (10) selon l'une quelconque des revendications 2 à 8, comprenant les étapes suivantes :
∘ Mise en prise d'une partie d'insertion (40) d'un objet (24) avec une rainure de guidage (22) d'une partie de guidage (20) d'un canal de fixation (16), compris par une structure de fixation (14) ;
∘ Déplacement d'une cavité (34) d'une agrafe de fixation (12), formée entre une partie frein (32) et une partie crochet (26), de manière transversale à une direction longitudinale (x) dudit canal de fixation (16) vers ladite partie de guidage (20), dans lequel lors d'un contact avec ladite partie de guidage (20), une partie crochet supérieure (28) de ladite partie crochet (26) et la partie frein (32) sont écartées sous déformation élastique de l'agrafe de fixation (12) ; et
∘ Encliquetage de ladite partie de guidage (20) dans ladite cavité (34), lors du passage de ladite partie crochet supérieure (28), sous inversion partielle de ladite déformation élastique, provoquant la poussée de ladite partie crochet supérieure (28) contre une surface interne de canal (18) dudit canal de fixation (16) et la traction de ladite partie frein (32) vers ladite partie crochet (26), appliquant ainsi une force de freinage (36) sur une surface externe (38) de la structure de fixation (14), tandis que ladite partie crochet supérieure (28) est poussée contre la surface interne de canal (18) et supportée par la partie de guidage (20).

10. Procédé de démontage d'un système (10) selon l'une quelconque des revendications 2 à 8, comprenant les étapes suivantes :
∘ Écartement d'une partie crochet (26) et d'une partie frein (32) d'une agrafe de fixation (12) qui est fixée à une structure de fixation (14), jusqu'à ce qu'une force de freinage (36) appliquée par la partie frein (32) sur une surface externe (38) de ladite structure de fixation (14) ait été réduite à un niveau permettant un déplacement manuel de ladite agrafe de fixation (12) dans une direction longitudinale (x) le long d'une partie de guidage (20) dudit canal de fixation (16) ; et
∘ Retrait par glissement de ladite agrafe de fixation (12) de ladite partie de guidage (20) dans la direction longitudinale (x), soit conjointement avec un objet (24) fixé à ladite structure de fixation (14) par ladite agrafe de fixation (12), soit avec dégagement d'une partie d'insertion (40) dudit objet (24) de ladite structure de fixation (14) avant le retrait par glissement de ladite agrafe de fixation (12).

11. Aéronef, comprenant un système (10) selon l'une quelconque des revendications 1 à 8.
